# EUROPÄISCHE PATENTSCHRIFT

(11) **EP 1 362 772 B1**
(45) Veröffentlichungstag und Bekanntmachung des Hinweises auf die Patenterteilung: **23.08.2006**
(21) Anmeldenummer: 03010601.7
(22) Anmeldetag: 12.05.2003
(51) Int. Cl.: B62D 33/063, C05F 17/02, A01C 3/02

(54) **Fahrzeug zum Umsetzen von Kompostmieten**
Vehicle for turning over of compost clamps
Véhicule pour retourner un silo de compost

(30) Priorität: 13.05.2002 DE 20207485 U
(43) Veröffentlichungstag der Anmeldung: 19.11.2003
(73) Patentinhaber: Komptech Farwick GmbH, 8130 Frohnleiten (AT)
(72) Erfinder: Pretzler, Rudolf, A-8600 Bruck/Mur (AT); Heissenberger, Josef, A-8045 Graz (AT)
(74) Vertreter: Laufhütte, Dieter

(56) Entgegenhaltungen:
- EP-A- 0 641 708
- DE-A- 2 630 103
- DE-A- 19 856 664
- DE-C- 4 211 842
- US-A- 4 421 188

## Beschreibung

Die vorliegende Erfindung betrifft ein Fahrzeug zum Umsetzen von Kompostmieten, mit einem Fahrwerk, einem von dem Fahrwerk getragenen Fahrzeugchassis, einer am Fahrzeugchassis gelagerten, rotatorisch antreibbaren Kompostbearbeitungswalze, sowie einem Fahrerstand, der zwischen einer Transportstellung und einer Betriebsstellung relativ zum Fahrzeugchassis bewegbar ist.

Die Druckschrift DE 42 11 842 C1 beschreibt ein Fahrzeug zum Umsetzen von Kompostmieten, bei dem das Fahrzeugchassis die Kompostbearbeitungswalze brückenförmig überspannt, so dass der Durchtrittskanal zwischen der Unterseite des Fahrzeugchassis über der Kompostbearbeitungswalze und der genannten Kompostbearbeitungswalze einen trapezförmigen Querschnitt besitzt. Durch die drehbar antreibbare Walze wird die in Dreiecksform abgelegte Kompostmiete aufgenommen und derart hochgeschleudert, dass der Kompost sich hinter der Walze wieder in der gewünschten Dreiecksform aufeinanderhäuft. Dieser sogenannte Dreiecksmietenumsetzer besitzt einen Fahrerstand mit Fahrersitz, Steuerrad etc. auf einer Fahrzeugoberseite, der zu einer Fahrzeugseite hin über dem dort schräg abfallenden Fahrzeugchassis fest angeordnet ist. Nachteilig ist hieran, dass dieser Fahrerstand dann, wenn er in Form einer geschlossenen Kabine ausgebildet ist, beträchtlich über die Oberseite des Fahrzeugchassis übersteht, wodurch die Transporthöhe des Mietenumsetzers in unerwünschter Weise erhöht wird. Darüber hinaus ist der Fahrerstand nur über eine Aufstiegshilfe wie z. B. eine Leiter oder dergleichen erreichbar.

Um die Transporthöhe solcher Mietenumsetzer zu verringern, wurde bereits vorgeschlagen, einen relativ zum Fahrzeugchassis bewegbaren Fahrerstand vorzusehen, der seitlich über das Fahrzeugchassis hinaus weggeschwenkt werden kann, so dass in dieser seitlichen Transportstellung des Fahrerstandes die Gesamthöhe des Mietenumsetzers verringert ist. Die Anordnung des Fahrerstandes ist jedoch in verschiedener Hinsicht immer noch unbefriedigend und weiter verbesserungsfähig.

Der vorliegenden Erfindung liegt daher die Aufgabe zugrunde, einen verbesserten Mietenumsetzer der eingangs genannten Art zu schaffen, der Nachteile des Standes der Technik vermeidet und letzteren in vorteilhafter Weise weiterbildet. Vorzugsweise soll eine verbesserte Anordnung des Fahrerstands geschaffen werden.

Erfindungsgemäß wird diese Aufgabe durch ein Fahrzeug gemäß Anspruch 1 gelöst. Bevorzugte Ausgestaltungen der Erfindung sind Gegenstand der Unteransprüche.

Erfindungsgemäß ist also ein Hubschwenkwerk für den Fahrerstand vorgesehen, wobei das Hubschwenkwerk derart ausgebildet ist, dass der Fahrerstand in eine abgesenkte Transportstellung zwischen Fahrzeugchassis und Kompostbearbeitungswalze schwenkbar ist. Der Fahrerstand wird also zum Zwecke des Transports nicht seitlich in Fahrtrichtung neben das Fahrzeugchassis geschwenkt, sondern in den Kompostdurchtrittskanal, der von der Kompostbearbeitungswalze und dem die Walze brückenförmig überspannenden Fahrzeugchassis begrenzt wird. Hierdurch lässt sich eine besonders kompakte Transportkonfiguration erreichen. Ein seitlicher Überstand, der die Fahrzeugbreite erhöhen würde, ist vermieden. Zudem kann die Höhe des Fahrzeugs zum Zwecke des Transports beträchtlich reduziert werden.

In Weiterbildung der Erfindung kann das Hubschwenkwerk den Fahrerstand auf einer Kreisbahn um das Fahrzeugchassis herum unter die Fahrzeugchassisunterseite, die über der Kompostbearbeitungswalze liegt, schwenken, so dass die Fahrerstandoberseite unter der Chassisunterseite liegt. In der Transportstellung wird der höchste Punkt des Fahrzeugs also nicht mehr von dem Fahrerstand gebildet, insofern als dieser sich unter dem Fahrzeugchassis befindet. Die Bewegungsbahn des Fahrerstandes um das Fahrzeugchassis herum erlaubt es dabei, das Fahrzeugchassis ohne Ausnehmungen, Durchbrüche und dergleichen auszubilden, die dann erforderlich wären, wenn der Fahrerstand aus einer Betriebsstellung auf der Chassisoberseite geradlinig nach unten abgesenkt werden sollte. Der Verzicht auf entsprechende Ausnehmungen bzw. Durchbrüche im Fahrzeugchassis erlaubt trotz der Absenkbarkeit des Fahrerstandes in den Durchtrittskanal unter dem Fahrzeugchassis eine stabile Konstruktion des Fahrzeugchassis.

Vorteilhafterweise ist der Fahrerstand mittels des Hubschwenkwerks derart absenkbar, dass der Fahrerstand vom Boden aus ohne Aufstiegshilfen wie Leitern und dergleichen besteigbar ist. Die bodennahe, abgesenkte Stellung des Fahrerstandes, in der letzterer von einer auf dem Boden stehenden Person erreichbar ist, erleichtert zudem den Zugang zum Fahrerstand für Wartungszwecke, z. B. wenn ein Filterwechsel einer Schutzbelüftungsanlage vorgenommen werden soll.

In Weiterbildung der Erfindung wird der Fahrerstand beim Absenken in die Transportstellung in Fahrtrichtung zurück unter das Fahrzeugchassis bewegt, derart, dass der Fahrerstand in seiner Transportstellung weder nach vorne noch nach hinten über den Rest des Fahrzeugs übersteht. Die maximalen Abmessungen des Fahrzeugs werden in der abgesenkten Transportstellung des Fahrerstandes nicht von diesem bestimmt bzw. nicht vergrößert. Die horizontale Bewegungskomponente in Fahrtrichtung bzw. entgegengesetzt der Fahrtrichtung beim Verschwenken des Fahrerstands bewirkt eine besonders kompakte Transportkonfiguration des Fahrzeugs.

In Weiterbildung der Erfindung besitzt das Hubschwenkwerk ein Paar Schwenkarme, die mit ihren chassisseitigen Enden schwenkbar am Fahrzeugchassis, insbesondere an einer Chassisoberseite um eine sich quer zur Fahrtrichtung erstreckende Hubschwenkachse angelenkt sind und mit ihren fahrerstandseitigen Enden den Fahrerstand tragen. Vorzugsweise ist der Fahrerstand selbst an den Schwenkarmen ebenfalls schwenkbar angelenkt, wobei die Hubschwenkachse der Schwenkarme sowie die Fahrerstandschwenkachse, um die der Fahrerstand zu den Schwenkarmen schwenkbar ist, zueinander parallel ausgerichtet sind. Vorzugsweise erstrecken sich beide Achsen horizontal quer zur Fahrtrichtung.

Nach einer vorteilhaften Ausführung der Erfindung ist für den Fahrerstand eine Parallelführung vorgesehen, so dass der Fahrerstand beim Verschwenken durch das Hubschwenkwerk seine Winkelstellung beibehält und nicht sozusagen auf den Kopf gestellt wird. Grundsätzlich könnte der Fahrerstand an den Schwenkarmen pendelnd aufgehängt sein, so dass er in Folge der Schwerkraft beim Verschwenken seine Winkelstellung beibehält. Vorzugsweise jedoch ist eine Zwangsparallelführung für den Fahrerstand vorgesehen, die beim Verschwenken des Fahrerstandes die Winkeldrehung des Hubschwenkwerks kompensiert. Insbesondere kann die Parallelführung einen Getriebeteil aufweisen, durch den eine fahrerstandsfeste Fahrerstandsachse an die Winkelstellung einer chassisfesten Schwenkarmachse gekoppelt ist. Der Getriebeteil stellt sicher, dass die drehfest mit dem Fahrerstand verbundene Fahrerstandsachse stets die gewünschte Winkelstellung einnimmt. Das genannte Getriebeteil kann grundsätzlich verschieden ausgebildet sein. Unterschiedliche Koppelungen sind denkbar. Vorzugsweise besteht die Parallelführung aus einem Kettengetriebe, das im Inneren des Schwenkarms angeordnet sein kann. Vorzugsweise läuft eine endlose Kette über zwei Kettenritzel, von denen eines drehfest auf der chassisfesten Schwenkarmachse und das andere drehfest auf der fahrerstandsfesten Fahrerstandsachse am anderen Ende der Schwenkarme sitzt. Die Kette könnte auch durch andere biegeschlaffe Zugmittel wie z. B. einen Riemen ersetzt sein. Vorzugsweise jedoch ist ein Kettengetriebe vorgesehen, das eine Parallelführung des Fahrerstands auch bei einer größeren Länge der Schwenkarme des Hubschwenkwerks bewirkt.

In Weiterbildung der Erfindung besitzen die Schwenkarme des Hubschwenkwerks einen gekrümmten bzw. abgewinkelten Verlauf. Sie können insbesondere jeweils aus zwei zueinander abgekröpften, geraden Schenkeln bestehen. Vorzugsweise sind die Schenkel der Schwenkarme derart angeordnet und ausgebildet, dass sich die Schwenkarme in der abgesenkten Transportstellung des Hubschwenkwerks mit ihren fahrzeugfest angelenkten Schenkeln entlang einer Chassisstirnseite nach unten und mit den daran anschließenden, fahrerstandsfesten Schenkeln unter dem Fahrzeugchassis in den Durchtrittskanal zwischen Fahrzeugchassis und Kompostierungswalze hinein erstrecken. Die Schwenkarme untergreifen also das Fahrzeugchassis, wenn sie in die abgesenkte Transportstellung geschwenkt sind, wobei die Schenkellängen sowie der Abknickwinkel zwischen den Schenkeln an die Kontur des Fahrzeugchassis angepasst sein kann. Nach einer Ausführung der Erfindung können die Schwenkarme etwa gleichlange Schenkel besitzen, die zueinander etwa im rechten Winkel abgewinkelt sind. Vorteilhafterweise sind die Schwenkarme des Hubschwenkwerks im Übergangsbereich zwischen einer Chassisoberseite und einer Chassisstirnseite schwenkbar angelenkt. In der nach oben geschwenkten Betriebsstellung können sich die fahrzeugfest angelenkten Schenkel der Schwenkarme auf der Chassisoberseite nach hinten erstrecken, so dass der Fahrerstand auf einer Oberseite des Fahrzeugchassis abgesetzt werden kann. Die Anlenkung der Schwenkarme im Bereich der Übergangskante zwischen Chassisoberseite und Chassisstirnseite ermöglicht einen großen Schwenkbereich der Schwenkarme.

Vorteilhafterweise ist der Fahrerstand in der Längsmittelebene des Fahrzeugs und/oder symmetrisch zu dem Durchtrittskanal für die Kompostmiete angeordnet. Hierdurch ergibt sich eine optimale Übersicht beim Führen des Fahrzeugs.

Zweckmäßigerweise besteht der Fahrerstand aus einer Fahrerkabine, so dass der Fahrzeugführer im Betrieb des Fahrzeugs geschützt und zur Umgebung hin abgeschottet werden kann. Vorzugsweise kann die Fahrerkabine dabei eine Kabinenunterseite besitzen, die im Längsquerschnitt einen stufenförmigen Absatz bzw. zur Kabinenrückseite hin an ihrer Unterseite einen Ausschnitt besitzt, mit der die Fahrerkabine auf die Fahrzeugchassisoberseite und/oder in der Transportstellung über die Kompostbearbeitungswalze gefahren werden kann. Der stufenförmige Absatz in der Kabinenunterseite ermöglicht ein noch tieferes Einschieben der Fahrerkabine in den Durchtrittskanal zwischen der Kompostbearbeitungswalze und dem Fahrzeugchassis.

Das Hubschwenkwerk kann unterschiedlich ausgebildete Schwenkarmantriebe aufweisen. Nach einer bevorzugten Ausführung der Erfindung kann ein Schwenkhebelmechanismus an den Schwenkarmen angelenkt sein, mit Hilfe dessen die Schwenkarme angetrieben werden können.

Die Erfindung wird nachfolgend anhand eines bevorzugten Ausführungsbeispieles und zugehöriger Zeichnungen näher erläutert. In den Zeichnungen zeigen:
- Fig. 1: eine perspektivische Ansicht eines Dreieckmietenumsetzers nach einer bevorzugten Ausführung der Erfindung, wobei eine Fahrerkabine in ihrer nach oben geschwenkten Betriebsstellung gezeigt ist,
- Fig. 2: eine perspektivische Ansicht des Mietenumsetzers aus Fig. 1, wobei die Fahrerkabine in ihrer abgesenkten, unter das Fahrzeugchassis eingeschwenkten Transportstellung gezeigt ist,
- Fig. 3: eine Seitenansicht des Mietenumsetzers aus Fig. 1 in der Betriebsstellung,
- Fig. 4: eine Seitenansicht des Mietenumsetzers aus Fig. 2 in der Transportstellung, wobei auch Komposteinfangbleche eingeschwenkt sind, und
- Fig. 5: eine perspektivische, vergrößerte Darstellung eines Schwenkarms des Hubschwenkwerks für die Fahrerkabine, wobei ein am Schwenkarm vorgesehenes Kettengetriebe zur Parallelführung der Fahrerkabine gezeigt ist.

Das in den Figuren gezeigte Fahrzeug zum Umsetzen von Kompostmieten weist ein als Fahrzeuggehäuse ausgebildetes Fahrzeugchassis 1 auf, an dem ein Fahrwerk 2 vorgesehen ist, das zwei Radachsen mit entsprechenden Rädern aufweist. Es versteht sich jedoch, dass das Fahrwerk 2 auch anders ausgebildet, z. B. durch ein Kettenfahrwerk gebildet sein kann. Das Fahrzeug ist selbstfahrend mit zumindest einer angetriebenen Radachse ausgebildet.

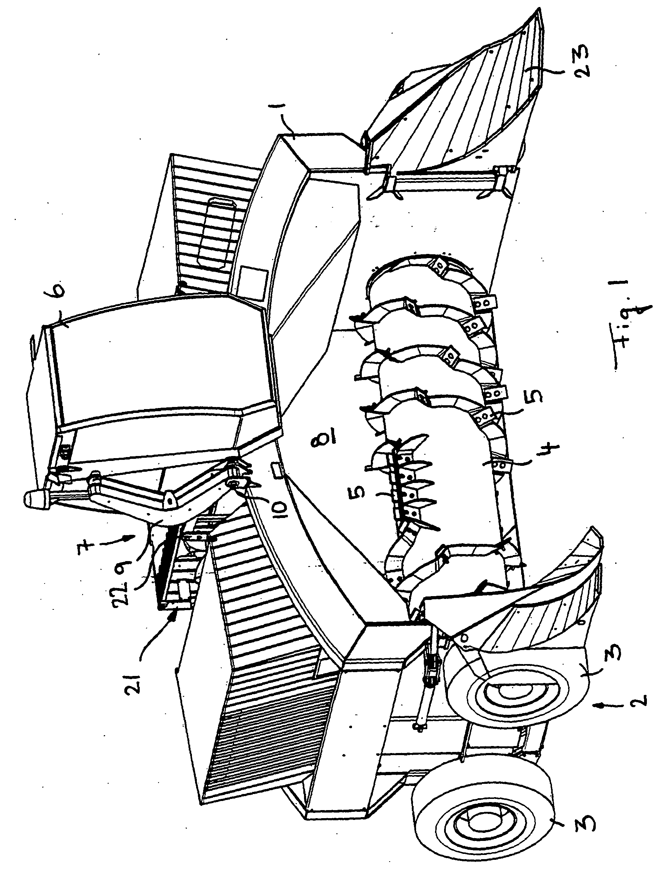

Das Fahrzeugchassis 1 überspannt brückenartig eine Kompostbearbeitungswalze 4, die an dem Fahrzeugchassis 1 um eine horizontale Querachse rotatorisch antreibbar gelagert ist. Die Kompostbearbeitungswalze 4 dient zur Aufnahme und zum Hochschleudern von in Dreiecksform abgelegten Kompostmieten. Sie ist mit am Umfang vorgesehenen Wurfwerkzeugen 5 ausgestattet. Um eine dreiecksförmige Ablage der Kompostmiete zu erreichen, ist die Kompostbearbeitungswalze 4 mit nach innen verlaufenden Schnecken versehen. Zudem ist zwischen der Kompostbearbeitungswalze 4 und der Unterseite des Fahrzeugchassis 1 ein Durchtrittskanal belassen, durch den der hochgeworfene Kompost geschleudert werden kann, bevor er sich hinter der Walze 4 wieder in Dreiecksform aufhäuft. Der Durchtrittskanal besitzt dabei Trapezform. Das Fahrzeugchassis 1 besteht über der Kompostbearbeitungswalze 4 aus einem im wesentlichen horizontalen Mittelabschnitt sowie zwei seitlich abfallenden Seitenschenkeln (vgl. Figur 1).

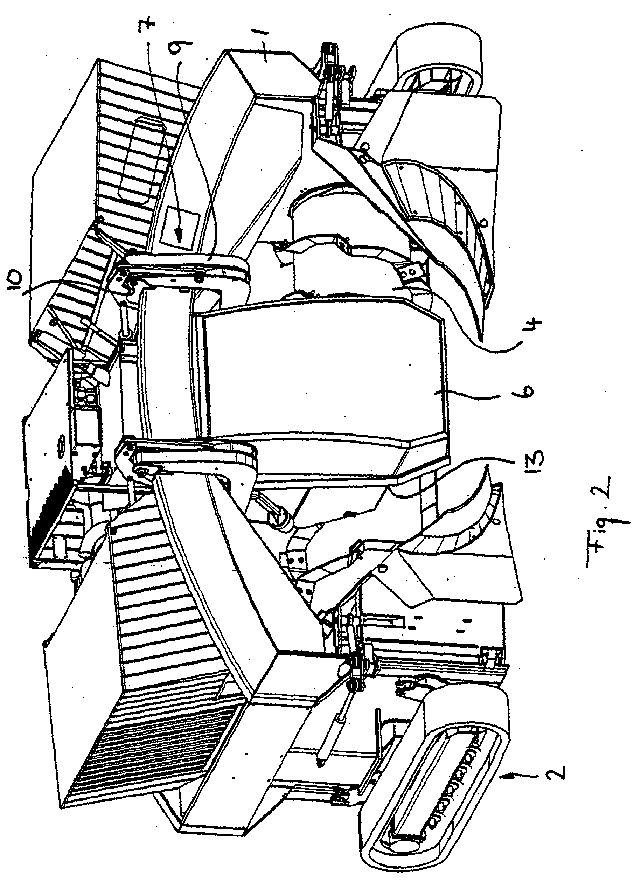

In der Fahrzeugmitte, also auf dem horizontalen Mittelabschnitt des Fahrzeugchassis 1 ist die Fahrerkabine 6 für den Fahrzeugführer angeordnet. An dem Fahrzeugchassis 1 ist dabei ein Hubschwenkwerk 7 vorgesehen, mittels dessen die Fahrerkabine 6 aus der in Figur 1 gezeigten Betriebsstellung, in der die Fahrerkabine 6 auf der Oberseite des Fahrzeugchassis 1 sitzt, in die in Figur 2 gezeigte Transportstellung, in der die Fahrerkabine 6 unter dem Fahrzeugchassis 1 in dem Durchtrittskanal 8 zwischen der Fahrzeugchassisunterseite und der Kompostbearbeitungswalze 4 sitzt, geschwenkt werden kann.

Wie Figur 2 zeigt, umfasst das Hubschwenkwerk 7 zwei Schwenkarme 9, zwischen denen die Fahrerkabine 6 aufgehängt ist. Die Schwenkarme 9 sind um eine Querachse 10 am vorderen oberen Ende des Fahrzeugchassis 1 schwenkbar an diesem angelenkt. Mit ihrem frei auskragenden Ende tragen die Schwenkarme 9 die Fahrerkabine 6, die an den Schwenkarmen 9 ebenfalls um eine Querachse schwenkbar gelagert ist.

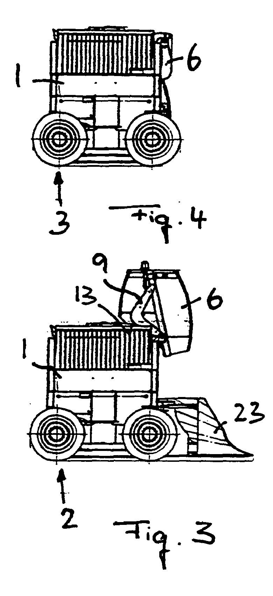

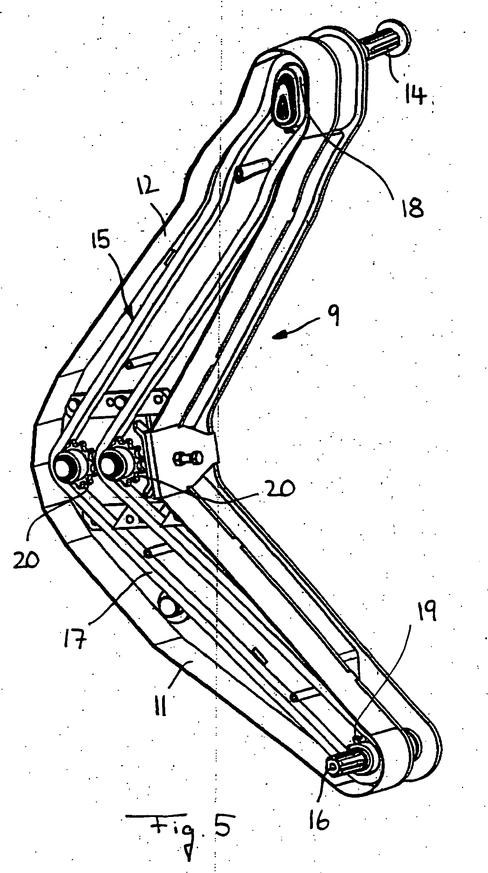

Wie Figur 5 zeigt, besteht jeder der Schwenkarme 9 aus zwei Schenkeln 11 und 12, die etwa gleichlang sind und zueinander etwa im rechten Winkel abgewinkelt sind. In der abgesenkten Transportstellung gemäß Figur 2 erstrecken sich die Schwenkarme 9 mit ihrem fahrzeugseitigen Schenkel im wesentlichen senkrecht nach unten entlang der Stirnseite des Fahrzeugchassis 1 und mit ihrem kabinenseitigen Schenkel etwa horizontal nach hinten entlang der Unterseite des Fahrzeugchassis 1 in den Durchtrittskanal 8 hinein. In der angehobenen Betriebsstellung hingegen, die Figur 1 zeigt, erstrecken sich die Schwenkarme 9 mit ihren fahrzeugseitigen Schenkeln 11 auf der Chassisoberseite nach hinten und mit ihren kabinenseitigen Schenkeln nach oben. Wie die Figuren 2 und 3 zeigen, besitzt die Fahrerkabine 6 an ihrer Unterseite einen stufenförmigen Absatz, d. h. an der Rückseite der Fahrerkabine ist deren Boden höher gesetzt. Mit dem stufenförmigen Absatz 13 sitzt die Fahrerkabine 6 in der Betriebsstellung auf der Chassisoberseite. In der abgesenkten Transportstellung schafft der Absatz 13 Platz für die Kompostbearbeitungswalze 4, so dass die Fahrerkabine gänzlich in den Durchtrittskanal 8 eingeschwenkt werden kann.

Wie Figur 3 zeigt, liegt der Anlenkpunkt der Fahrerkabine an den Schwenkarmen 9 im Längsquerschnitt etwa mittig und etwa in der oberen Hälfte, genauer gesagt etwa im oberen Drittel der Fahrerkabine 6.

Die Anlenkung der Fahrerkabine 6 an die Schwenkarme 9 ist in Figur 5 näher gezeigt. An ihrem freien Ende tragen die Schwenkarme 9 eine Kabinenachse 14, die drehfest mit der Fahrerkabine 6 verbunden und an den Schwenkarmen 9 drehbar gelagert ist. Über ein Kettengetriebe 15 ist die Kabinenachse 14 an eine starr und undrehbar am Fahrzeugchassis 1 verankerte Schwenkarmachse 16 gekoppelt, um die der jeweilige Schwenkarm 9 geschwenkt werden kann. Das Kettengetriebe 15 umfasst eine Endloskette 16, die einerseits um ein kabinenachsenfestes Ritzel 18 und andererseits um ein schwenkarmachsenfestes Ritzel 19 geführt ist. Zudem wird die Kette 17 über zwei im Knickbereich des Schwenkarms angeordnete Umlenkräder bzw. -ritzel 20 geführt, so dass das Kettengetriebe 15 insgesamt in den Innenraum der Schwenkarme 9 integriert werden kann. Vorzugsweise besitzen die Ritzel 18 und 19 dieselbe Zähnezahl, so dass eine exakte Parallelführung der Fahrerkabine 6 bei deren Schwenkbewegung um die Schwenkarmachse 16 erreicht wird. Das Kettengetriebe könnte auch derart ausgebildet sein, dass die Fahrerkabine beim Verschwenken eine leichte Winkeldrehung ausführt, und könnte damit sozusagen eine Schwenkwinkelsteuerung für den Fahrerstand bei dessen Verfahren zwischen Betriebs- und Transportstellung bilden.

Die Schwenkarme 9 werden von einem Schwenkarmantrieb 21 angetrieben, der, wie Figur 1 zeigt, einen Schwenkhebelmechanismus 22 aufweist. Um in der abgesenkten Transportstellung die Fahrzeugausmaße weiter zu verkleinern, besitzt das Fahrzeug schwenkbare Komposteinfangbleche 23, die nach Verschwenken der Fahrerkabine 6 in die in Figur 2 gezeigte Transportstellung um im wesentlichen aufrechte Schwenkachsen nach innen geschwenkt werden können, so dass die Fahrzeuglänge gemäß Figur 4 von der Kontur des Fahrwerks 2 bzw. dessen Räder 3 bestimmt wird.

## Patentansprüche

1. Fahrzeug zum Umsetzen von Kompostmieten, mit einem Fahrwerk (2), einem vom Fahrwerk (2) getragenen Fahrzeugchassis (1), einer am Fahrzeugchassis (1) gelagerten, rotatorisch antreibbaren Kompostbearbeitungswalze (4), die von dem Fahrzeugchassis (1) brückenartig überspannt ist, so dass zwischen dem Fahrzeugchassis (1) und der Kompostbearbeitungswalze (4) ein Durchtrittskanal (8) für den umzusetzenden Kompost vorgesehen ist, sowie einem Fahrerstand (6) **dadurch gekennzeichnet, dass** der Fahrerstand zwischen einer Transportstellung und einer Betriebsstellung relativ zum Fahrzeugchassis (1) bewegbar ist, und daß ein Hubschwenkwerk (7) vorgesehen ist, mittels dessen der Fahrerstand (6) in eine abgesenkte Transportstellung in den Durchtrittskanal (8) zwischen dem Fahrzeugchassis (1) und der Kompostbearbeitungswalze (4) schwenkbar ist.

2. Fahrzeug nach dem vorhergehenden Anspruch, wobei der Fahrerstand (6) auf einer Kreisbahn um das Fahrzeugchassis (1) herum unter eine Fahrzeugchassisunterseite über der Kompostbearbeitungswalze (4) schwenkbar ist.

3. Fahrzeug nach einem der vorhergehenden Ansprüche, wobei der Fahrerstand derart bodennah absenkbar ist, dass der Fahrerstand (6) vom Boden aus ohne Aufstiegshilfen wie Leitern und dergleichen besteigbar ist.

4. Fahrzeug nach einem der vorhergehenden Ansprüche, wobei der Fahrerstand (6) in Fahrtrichtung zurück unter das Fahrzeugchassis (1) schwenkbar ist derart, dass der Fahrerstand (6) in seiner Transportstellung überstandsfrei innerhalb der Fahrzeugkontur angeordnet ist.

5. Fahrzeug nach einem der vorhergehenden Ansprüche, wobei das Hubschwenkwerk (7) eine quer zur Fahrtrichtung ausgerichtete Hubschwenkachse (16) aufweist.

6. Fahrzeug nach einem der vorhergehenden Ansprüche, wobei das Hubschwenkwerk (7) zumindest einen Schwenkarm (9), vorzugsweise ein Paar Schwenkarme (9), mit einem chassisseitigen Ende, das schwenkbar am Fahrzeugchassis (1), insbesondere an einer Chassisoberseite, angelenkt ist, und einem fahrerstandseitigen Ende, an dem der Fahrerstand vorzugsweise schwenkbar angelenkt ist, aufweist.

7. Fahrzeug nach einem der vorhergehenden Ansprüche, wobei das Hubschwenkwerk eine Parallelführung (15) aufweist, die beim Schwenken des Fahrerstands (6) den Fahrerstand (6) in etwa derselben Winkelstellung hält.

8. Fahrzeug nach dem vorhergehenden Anspruch, wobei die Parallelführung (15) in den zumindest einen Schwenkarm (9) integriert ist, insbesondere aus einem im Inneren des Schwenkarms (9) laufenden Kettengetriebe (15) besteht.

9. Fahrzeug nach einem der vorhergehenden Ansprüche, wobei der zumindest eine Schwenkarm (9) des Hubschwenkwerks (7), vorzugsweise jeder der Schwenkarme (9) des Hubschwenkwerks, aus zwei zueinander abgekröpften Schenkeln (11, 12) besteht und derart angeordnet und ausgebildet ist, dass der am Fahrerstand (6) angelenkte Schenkel (12) in der abgesenkten Transportstellung das Fahrzeugchassis (1) untergreift.

10. Fahrzeug nach einem der vorhergehenden Ansprüche, wobei der Fahrerstand (6) in der Fahrzeugmitte angeordnet ist.

11. Fahrzeug nach einem der vorhergehenden Ansprüche, wobei der Fahrerstand aus einer Fahrerkabine (6) besteht, wobei vorzugsweise eine Kabinenunterseite einen stufenförmigen Absatz (13) aufweist, mit dem die Fahrerkabine auf eine Fahrzeugchassisoberseite und/oder über die Kompostbearbeitungswalze (4) fahrbar ist.

12. Fahrzeug nach einem der vorhergehenden Ansprüche, wobei der zumindest eine Schwenkarm (9) über einen Schwenkhebelmechanismus (22) antreibbar ist.

## Claims

1. A vehicle for moving compost heaps, with an undercarriage (2), a vehicle chassis (1) supported by the undercarriage (2), a rotatably driven compost processing roller (4) mounted on a vehicle chassis (1) and which is spanned by the vehicle chassis (1) like a bridge such that a through channel (8) is provided between the vehicle chassis (1) and the compost processing roller (4) for the compost to be moved, and a driver's cab (6), **characterised in that** the driver's cab is moveable relative to the vehicle chassis (1) between a transport position and an operational position, and that a pivotal lift (7) is provided by means of which the driver's cab (6) can be pivoted into a lowered transport position in the through channel (8) between the vehicle chassis (1) and the compost processing roller (4).

2. The vehicle according to the preceding claim, the driver's cab (6) being pivotable over a circular path around the vehicle chassis (1) below a lower side of the vehicle chassis and over the compost processing roller (4).

3. The vehicle according to either of the preceding claims, it being possible to lower the driver's cab close to the ground such that it is possible to climb into the driver's cabin (6) from the ground without climbing aids such as ladders or similar.

4. The vehicle according to any of the preceding claims, the driver's cab (6) being pivotable back below the vehicle chassis (1) in the direction of travel such that in its transport position, the driver's cabin (6) is disposed within the vehicle contour without any projection.

5. The vehicle according to any of the preceding claims, the pivotal lift (7) having a pivotal lift axis (16) orientated at right angles to the direction of travel.

6. The vehicle according to any of the preceding claims, the pivotal lift (7) having at least one pivot arm (9), preferably a pair of pivot arms (9), with an end on the chassis side which is disposed pivotably on the vehicle chassis (1), in particular on a chassis upper side, and an end on the driver's cab side at which the driver's cab is preferably disposed pivotably.

7. The vehicle according to any of the preceding claims, the pivotal lift having parallel guidance (15) which holds the driver's cab (6) in approximately the same angular position when the driver's cab (6) is pivoted.

8. The vehicle according to the preceding claim, the parallel guidance (15) being integrated into the at least one pivot arm (9) and in particular consisting of a one chain drive (15) running within the pivot arm (9).

9. The vehicle according to any of the preceding claims, the at least one pivot arm (9) of the pivot lift (7), preferably each of the pivot arms (9) of the pivot lift, consisting of two side pieces (11, 12) offset relative to one another, and disposed and designed such that the side piece (12) disposed on the driver's cab (6) engages below the lowered transport position of the vehicle chassis (1).

10. The vehicle according to any of the preceding claims, the driver's cab (6) being disposed in the middle of the vehicle.

11. The vehicle according to any of the preceding claims, the driver's cab consisting of a driver's cabin (6), a lower side of the cabin preferably having a step-like projection (13) by means of which the driver's cabin can be moved onto an upper side of the vehicle chassis and/or over the compost processing roller (4).

12. The vehicle according to any of the preceding claims, it being possible to drive the at least one pivot arm (9) by means of a pivot lift mechanism (22).

## Revendications

1. Véhicule pour retourner des silos de compost, comprenant un train de roulement (2), un châssis de véhicule (1) porté par le train de roulement (2), un cylindre de traitement de compost (4) logé sur le châssis de véhicule (1) et pouvant être entraîné par rotation, qui est surmonté à la façon d'un pont par le châssis de véhicule (1), de sorte qu'un canal de passage (8) pour le compost à retourner est prévu entre le châssis de véhicule (1) et le cylindre de traitement de compost (4), et un poste de conduite (6) **caractérisé en ce que** le poste de conduite est placé entre une position de transport et une position de service par rapport au châssis de véhicule (1), et **en ce qu'**il est prévu un dispositif de levage et de basculement (7), au moyen duquel le poste de conduite (6) peut être basculé dans une position de transport abaissée dans le canal de passage (8) entre le châssis de véhicule (1) et le cylindre de traitement de compost (4).

2. Véhicule selon la revendication précédente, le poste de conduite (6) pouvant être basculé sur une trajectoire autour du châssis de véhicule (1) sous un côté inférieur du châssis de véhicule au-dessus du cylindre de traitement de compost (4).

3. Véhicule selon l'une quelconque des revendications précédentes, le poste de conduite pouvant être abaissé à proximité du sol de telle sorte que le poste de conduite (6) peut être escaladé à partir du sol sans aides de montée comme des échelles et similaires.

4. Véhicule selon l'une quelconque des revendications précédentes, le poste de conduite (6) pouvant basculer dans le sens de marche en arrière sous le châssis de véhicule (1), de telle sorte que le poste de conduite (6) est disposé dans sa position de transport sans saillie à l'intérieur du contour de véhicule.

5. Véhicule selon l'une quelconque des revendications précédentes, le dispositif de levage et de basculement (7) présentant un axe de levage et de basculement orienté transversalement (16) au sens de marche.

6. Véhicule selon l'une quelconque des revendications précédentes, le dispositif de levage et de basculement (7) présentant au moins un bras pivotant (9), de préférence une paire de bras pivotants (9), avec une extrémité côté châssis qui est articulée de façon pivotante sur le châssis de véhicule (1), en particulier sur un côté supérieur du châssis, et une extrémité côté poste de conduite, sur laquelle le poste de conduite est articulé de préférence de façon pivotante.

7. Véhicule selon l'une quelconque des revendications précédentes, le dispositif de levage et de basculement présentant un guidage parallèle (15) qui maintient le poste de conduite (6) dans à peu près la même position angulaire lors du basculement du poste de conduite (6).

8. Véhicule selon la revendication précédente, le guidage parallèle (15) étant intégré dans le au moins un bras pivotant (9), étant constitué en particulier d'un engrenage à chaîne (15) passant à l'intérieur du bras pivotant (9).

9. Véhicule selon l'une quelconque des revendications précédentes, le au moins un bras pivotant (9) du dispositif de levage et de basculement (7), de préférence chacun des bras pivotants (9) du dispositif de levage et de basculement se composant d'au moins deux branches (11, 12) coudées l'une par rapport à l'autre et étant disposé et réalisé de telle sorte que la branche (12) articulée sur le poste de conduite (6) saisit par-dessous le châssis de véhicule (1) dans la position de transport abaissée.

10. Véhicule selon l'une quelconque des revendications précédentes, le poste de conduite (6) étant disposé au centre du véhicule.

11. Véhicule selon l'une quelconque des revendications précédentes, le poste de conduite étant constitué d'une cabine de conduite (6), un côté inférieur de cabine présentant de préférence un décrochement (13) en forme de marche, avec lequel la cabine de conduite peut se déplacer sur un côté supérieur du châssis de véhicule et/ou au-dessus du cylindre de traitement de compost (4).

12. Véhicule selon l'une quelconque des revendications précédentes, le au moins un bras pivotant (9) pouvant être entraîné au moyen d'un mécanisme de levier pivotant (22).
